# FASCICULE DE BREVET EUROPEEN

(11) **EP 2 944 507 B1**
(45) Date de publication et mention de la délivrance du brevet: **15.11.2017**
(21) Numéro de dépôt: 15165751.7
(22) Date de dépôt: 29.04.2015
(51) Int. Cl.: B60M 3/00, H02G 3/03, H05K 7/20

(54) **ELÉMENT D'ISOLATION ÉLECTRIQUE ENTRE UN DISPOSITIF ÉLECTRIQUE ET UN ORGANE DE REFROIDISSEMENT DU DISPOSITIF ÉLECTRIQUE ; SYSTÈME DE REFROIDISSEMENT COMPRENANT UN TEL ÉLÉMENT**
ELEKTRISCHES ISOLATIONSELEMENT ZWISCHEN EINER ELEKTRISCHEN VORRICHTUNG UND EINEM KÜHLORGAN DIESER ELEKTRISCHEN VORRICHTUNG, SOWIE KÜHLSYSTEM, DAS EIN SOLCHES ELEMENT UMFASST
ELEMENT FOR AN ELECTRIC INSULATION BETWEEN AN ELECTRIC DEVICE AND A UNIT FOR COOLING THE ELECTRIC DEVICE; COOLING SYSTEM COMPRISING SUCH AN ELEMENT

(30) Priorité: 16.05.2014 FR 1454419
(43) Date de publication de la demande: 18.11.2015
(73) Titulaire: ALSTOM Transport Technologies, 93400 Saint-Ouen (FR); ATHERM, 38420 Domene (FR)
(72) Inventeur: Dagdag, Selim, 65000 TARBES (FR); Chauchat, Bertrand, 65350 LIZOS (FR); Nicolau, Sébastien, 65100 LOUBAJAC (FR); Albertin, Thomas, 38130 ECHIROLLES (FR); Casarin, Jérémy, 31200 Toulouse (FR); Martin, Simon, 38400 SAINT-MARTIN-D'HERES (FR); Feillard, Thomas, 38830 SAINT-PIERRE-D'ALLEVARD (FR)
(74) Mandataire: Lavoix

(56) Documents cités:
- EP-A1- 0 720 420
- EP-A1- 2 680 303
- DE-U1-202008 014 815
- FR-A1- 2 680 919
- FR-A1- 2 951 856
- US-A- 3 662 137

## Description

La présente invention concerne un élément d'isolation électrique entre un dispositif électrique comprenant un circuit électrique susceptible d'être connecté directement à de la haute tension, et un organe de refroidissement du dispositif électrique. L'invention concerne également un système de refroidissement comportant un tel élément. Le document FR 2 680 919 A1 divulgue un élément d'isolation électrique entre un dispositif électrique comportant un circuit électrique propre à être relié directement à une caténaire, et un organe de refroidissement du dispositif électrique.

Les documents US 3 662 137 A, EP 0720 420 A1, DE 20 2008 014815 U1 et FR 2 951 856 A1 divulguent différents dispositifs de refroidissement de circuit électrique.

Une chaîne de traction de véhicule ferroviaire comporte des éléments de conversion d'énergie électrique, des dispositifs de transport d'énergie électrique et des éléments de conversion d'énergie électrique en énergie mécanique de type moteur de traction solidaire d'un axe de rotation entraînant une des roues du véhicule. Le moteur est fixé sur le bogie.

La chaîne comporte ainsi usuellement une pluralité de convertisseurs servant à transformer les signaux électriques que ce soit de type continu (aussi désigné par l'acronyme DC) en type alternatif (aussi désigné par l'acronyme AC) ou l'inverse, soit de type continu en type continu ou encore de type alternatif en type alternatif. Parmi ces convertisseurs, un onduleur est alimenté par une tension continue typiquement comprise entre 750 V (Volts) et 3300 V. Typiquement, l'alimentation en tension continue provient d'un pont redresseur simple ou de type PMCF (acronyme pour Pont Monophasé à Commutation Forcée) ayant transformé une tension de type alternative préalablement abaissée depuis la tension caténaire à l'aide d'un transformateur.

A partir de cette alimentation en tension continue, l'onduleur délivre trois phases d'un courant alternatif triphasé au moteur de traction. Ces trois phases sont créées en prenant le point milieu de deux interrupteurs de puissance mis en série et connectés au potentiel continu.

Les interrupteurs de puissance qui composent l'onduleur se présentent chacun sous la forme d'un boîtier de protection comportant un circuit électrique assurant la fonction d'interrupteur. L'ensemble du boîtier et de son contenu (module de puissance) est parfois appelé sous le terme anglais « pack ». Cet ensemble sera appelé sous le terme de « dispositif électrique » dans le reste de la description.

Le circuit électrique d'un interrupteur de puissance comporte généralement une pluralité de circuits intégrés reliés électriquement, ces circuits intégrés étant supportés indirectement par des substrats isolants.

Les substrats isolants ont pour fonction d'assurer l'isolation électrique entre le ou les circuits intégrés qu'ils supportent et la face arrière du boîtier, d'évacuer les pertes créées par échauffement des circuits intégrés et d'éviter d'imposer des contraintes thermomécaniques fortes à l'assemblage qui supporte les circuits intégrés. Les circuits intégrés sont par exemple des transistors bipolaires à grilles isolées (usuellement appelés sous l'acronyme IGBT qui désigne en anglais « insulated gate bipolar transistor ») ou des transistors à effets de champ (JFET pour « junction field effect transistor » ou MOSFET pour « métal oxyde semi-conductor field transistor »), ou des diodes.

L'une des manières de diminuer le poids de la chaîne de traction embarquée dans le véhicule ferroviaire repose sur l'augmentation des fréquences de commutation du signal à traiter par le transformateur. Cela permet, en effet, de diminuer fortement la taille du transformateur qui est inversement proportionnelle à la fréquence de ce signal. Ainsi, dans une architecture classique avec le transformateur en tête de la chaîne de traction, la fréquence de la tension caténaire étant comprise entre 10 Hz (Hertz) et 60 Hz, la taille et le poids du transformateur sont très élevés.

Cette transformation électrique du signal de la caténaire basse fréquence (10 à 60 Hz) en un signal électrique à fréquence plus élevée (quelques kHz) est réalisée grâce à des convertisseurs de puissances directement connectés à la caténaire. Ainsi, un signal de fréquence de quelques kHz peut être injecté en entrée du transformateur ou des transformateurs dans le cas d'une structure multi étage à multi transformateur en parallèle.

La contrepartie de la diminution de la taille du transformateur est le déplacement du transformateur depuis la caténaire vers le milieu de la chaîne de traction. Ainsi l'architecture de la chaîne de traction est modifiée depuis l'architecture classique avec transformateur / convertisseurs / moteur à une architecture de type convertisseur / transformateur / convertisseur / moteur. Cela implique de positionner des convertisseurs de puissance en tête de la chaîne de traction au plus proche de la caténaire et notamment d'exposer de manière continue certains composants du convertisseur à des différences de potentiel plus importantes.

Les interrupteurs de puissance de tête mis en série servent alors de pont diviseur de tension dans une telle configuration puisqu'une tension pouvant être comprise entre 750 V (Volts) et 3300 V est imposée à leur borne.

Ainsi, en présence d'un transformateur en tête, chaque circuit électrique est adapté pour résister à une exposition à des différences de potentiel de l'ordre d'une quinzaine de kiloVolts (kV) pendant une minute lors des phases de validation des composants. Or, si le circuit est relié directement à la caténaire dont la tension est par exemple de 25kV/50Hz, les surtensions pouvant être vues par la caténaire imposent que le circuit électrique soit capable de résister à une tension alternative de 60 kV pendant une minute. Dans ces conditions, le substrat isolant n'est plus suffisant pour assurer l'isolation électrique du circuit électrique.

Il est en outre connu, d'adjoindre au dispositif électrique un système de refroidissement afin d'évacuer les pertes créées par échauffement des circuits intégrés. Un tel système de refroidissement est généralement formé d'une plaque à eau conductrice ou d'un radiateur. Le système de refroidissement est relié à la masse et permet, par échange thermique, de limiter la température du circuit électrique. Or, pour les hauts niveaux de tension précités, ce type de système de refroidissement ne peut être isolé électriquement en l'état. Ceci rend impossible, dans le contexte précité, l'utilisation en l'état de tels systèmes de refroidissement.

Pour des tensions faibles voire moyennes, une solution connue permettant d'obtenir de bonnes performances de refroidissement thermique et d'isolation électrique consiste à utiliser un substrat isolant réalisé en nitrure d'aluminium. La solution la plus naturelle pour assurer l'isolation électrique à des tensions supérieures serait d'employer, dans un tel système de refroidissement, le nitrure d'aluminium avec une épaisseur plus importante que celle utilisée pour la réalisation de systèmes actuels supportant 15 kV pendant 1 minute.

Mais, la demanderesse s'est aperçue en effectuant des tests diélectriques que cela ne fonctionnait pas du fait de la variation de la rigidité diélectrique avec l'épaisseur. Ainsi, si un millimètre de nitrure d'aluminium peut supporter x kV, deux millimètres de ce même matériau ne supporte pas 2x kV mais une valeur inférieure. Autrement dit, il est observé un phénomène correspondant à une chute de la rigidité diélectrique lorsque l'épaisseur du matériau augmente.

De ce fait, la demanderesse estime que pour obtenir une couche isolante en nitrure d'aluminium résistant à une tension alternative de 60 kV pendant 1 minute, des épaisseurs supérieures à 15 mm sont à envisager. Mais, ces épaisseurs sont trop importantes puisqu'il en résulterait des contraintes thermomécaniques très élevées et des performances thermiques très mauvaises.

Une solution connue pour des hauts niveaux de tension consiste à utiliser en tant que système de refroidissement une plaque dans laquelle circule un fluide isolant de type huile, la plaque n'étant connectée à aucun potentiel électrique. Néanmoins, une telle solution présente de mauvaises performances de refroidissement thermique. Elle n'est par ailleurs pas satisfaisante du point de vue de la sécurité, l'huile étant inflammable.

Le but de l'invention est de proposer un élément d'isolation électrique permettant d'améliorer l'isolation électrique entre un dispositif électrique comportant un circuit électrique propre à être exposé de manière prolongée à une tension d'au moins 14 kV efficace, et un organe de refroidissement du dispositif électrique, tout en assurant des performances thermiques satisfaisantes pour l'organe de refroidissement.

A cet effet, l'invention a pour objet un élément d'isolation électrique et un système de refroidissement conformes aux revendications.

Les caractéristiques et avantages de l'invention apparaîtront à la lecture de la description qui va suivre, donnée uniquement à titre d'exemple non limitatif, et faite en référence aux dessins annexés, sur lesquels :
- la figure 1 est une vue schématique d'un ensemble comprenant un dispositif électrique et un système de refroidissement du dispositif électrique conforme à l'invention ;
- la figure 2 est une vue en perspective du système de refroidissement de la figure 1, comprenant un caloduc et un élément d'isolation électrique également conforme à l'invention ;
- la figure 3 est une vue en coupe longitudinale du système de refroidissement de la figure 1 ;
- la figure 4 est une coupe selon la ligne IV-IV de la figure 3 ; et
- la figure 5 est une coupe selon la ligne V-V de la figure 3.

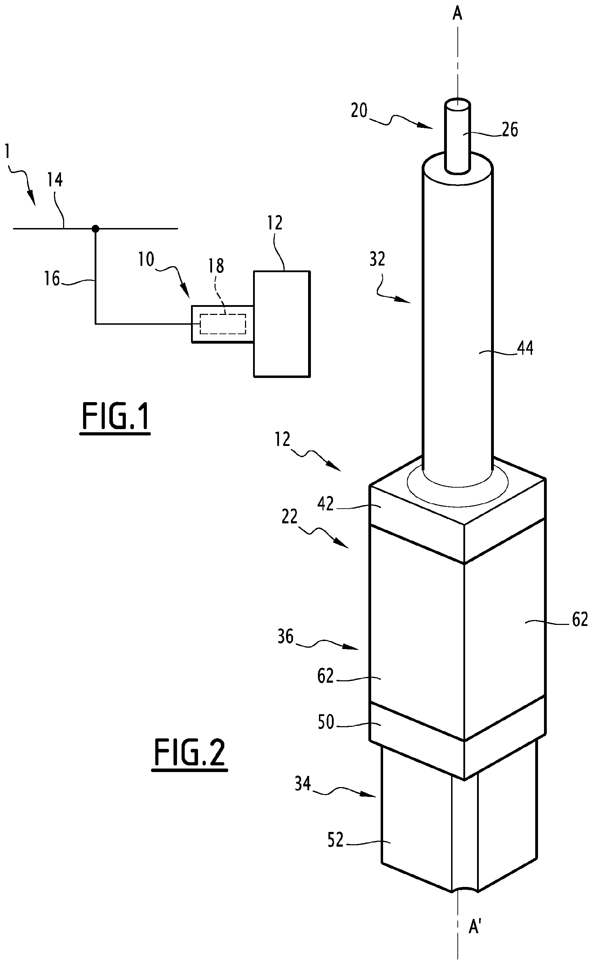

La figure 1 représente un ensemble 1 comprenant un dispositif électrique 10 et un système 12 de refroidissement du dispositif électrique 10 conforme à l'invention. Le dispositif électrique 10 est relié à une caténaire 14 via un câble haute tension 16, et est fixé sur une partie du système de refroidissement 12, comme détaillé par la suite.

Le dispositif électrique 10, qui constitue un pack, comporte un circuit électrique 18. Le circuit électrique 18 est relié directement à la caténaire 14. Ce circuit électrique 18 est un circuit utilisé dans le domaine ferroviaire. Il s'agit avantageusement d'un circuit électronique de puissance.

La caténaire 14 délivre un courant alternatif monophasé et présente une haute tension de valeur, par exemple, égale à 25 kV et une fréquence de valeur, par exemple, égale à 50 Hz.

Le système de refroidissement 12 comporte au moins un organe de refroidissement 20 et un élément 22 d'isolation électrique entre le dispositif électrique 10 et le ou chaque organe de refroidissement 20, l'élément 22 étant conforme à l'invention. Dans l'exemple de réalisation de la figure 2, le système de refroidissement 12 comporte un seul organe de refroidissement 20. Dans cet exemple de réalisation, l'organe de refroidissement 20 est un caloduc.

De façon connue, le caloduc 20 est propre à être relié à un échangeur thermique, par exemple un échangeur thermique à ailette, non représenté. Le caloduc 20 est formé d'un tube creux, par exemple en inox, et s'étend selon un axe longitudinal A-A'. Le caloduc 20 est fermé en ses deux extrémités, bien que l'extrémité supérieure du caloduc 20 soit représentée ouverte sur les figures dans un but de simplification.

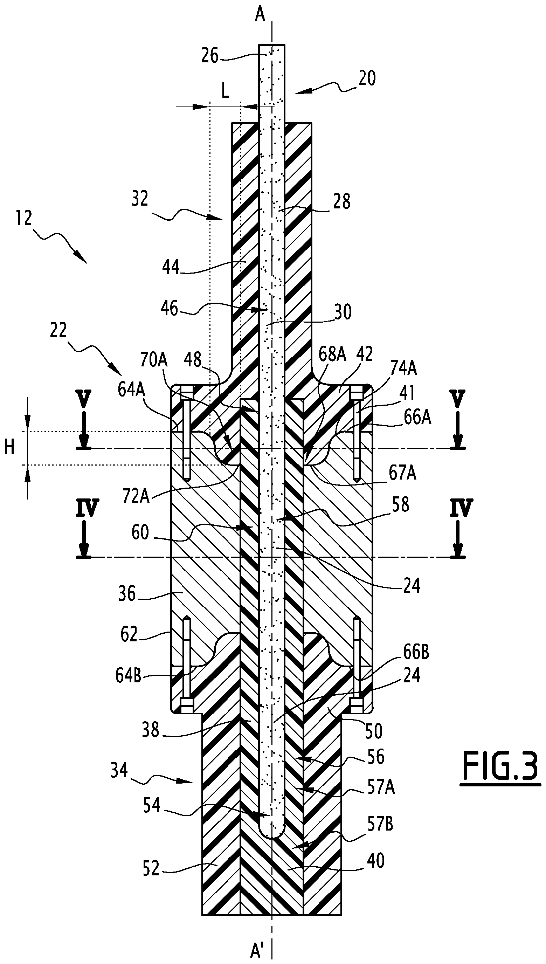

Comme représenté sur la figure 3, le caloduc 20 comprend de manière classique une portion chaude 24 agencée à l'intérieur de l'élément 22 et une portion froide 26 disposée à l'extérieur de l'élément 22. Dans l'exemple de réalisation, le caloduc 20 présente un diamètre extérieur sensiblement égal à 15 mm.

Le caloduc 20 comprend également un réservoir 28 reliant la portion chaude 24 à la portion froide 26. Le réservoir 28 contient un fluide caloporteur 30 et s'étend entre la portion chaude 24 et la portion froide 26, à l'intérieur de l'élément 22.

Le caloduc 20 forme, comme connu en soi, un organe de refroidissement du dispositif électrique 10. Il est destiné à refroidir les composants électriques du circuit électrique 18 afin de limiter, par échange thermique, les températures au sein de ces composants lors du fonctionnement du dispositif électrique 10. Le caloduc 20 est relié à une masse électrique, non représentée sur les figures.

Le fluide caloporteur 30 est, par exemple, du méthanol, utilisé à une température maximale de 125°C et sous une pression maximale de 10 bars.

L'élément d'isolation électrique 22 comprend au moins un tronçon d'isolation électrique. Dans l'exemple de réalisation des figures 2 à 5, l'élément 22 comprend un tronçon supérieur 32 d'isolation électrique et un tronçon inférieur 34 d'isolation électrique. Il comprend en outre un tronçon 36 conducteur d'électricité, agencé entre le tronçon supérieur 32 et le tronçon inférieur 34. L'élément 22 comprend également, à l'intérieur des tronçons 32, 34, 36, une couche 38 d'un matériau isolant électriquement 40, comme illustré sur les figures 3 à 5. Le matériau isolant 40 est avantageusement du nitrure de bore hexagonal sous forme compactée. En variante, le matériau isolant 40 est un composite formé de nitrure de bore hexagonal et de nitrure d'aluminium. En variante encore, le matériau isolant 40 est un composite formé de nitrure de bore hexagonal et d'alumine.

Chaque tronçon d'isolation électrique 32, 34 est rapporté contre le tronçon conducteur 36 et est de préférence fixé au tronçon conducteur 36 via des moyens de fixation classiques, tels que des vis de fixation 41 dans l'exemple de réalisation. Chaque tronçon d'isolation électrique 32, 34 est réalisé en matière plastique, par exemple à partir d'un matériau polymère thermoplastique tel que du polyétheréthercétone. Chaque tronçon d'isolation électrique 32, 34 présente avantageusement un même axe de révolution. Dans l'exemple de réalisation, l'axe de révolution des tronçons 32, 34 est l'axe longitudinal A-A'.

Le tronçon supérieur 32 comporte une base creuse supérieure 42 et une partie creuse supérieure 44, venue de matière avec la base supérieure 42. La base supérieure 42 présente une section transversale par exemple sensiblement rectangulaire, de préférence carrée de côté compris entre 40 mm et 90 mm. La partie supérieure 44 est par exemple un conduit cylindrique dont la courbe directrice est un cercle. La partie creuse supérieure 44 présente une hauteur par exemple sensiblement égale à 250 mm, un diamètre extérieur par exemple sensiblement égal à 44 mm et un diamètre intérieur sensiblement égal au diamètre du caloduc 20, autrement dit sensiblement égal à 15 mm dans l'exemple de réalisation. La partie supérieure 44 est destinée à former un rempart physique pour éviter le cheminement électrique de surface (encore appelé cheminement) entre le caloduc 20 et le tronçon conducteur 36. La partie supérieure 44 présente en outre une épaisseur suffisante, par exemple au moins égale à 3mm, afin de ne pas créer un claquage diélectrique entre le caloduc 20 relié à la masse et le tronçon conducteur 36. Dans l'exemple de réalisation représenté sur les figures 2 et 3, la partie supérieure 44 est de forme tubulaire dans l'axe du caloduc 20. En variante, la partie supérieure 44 est de forme plate et perpendiculaire à l'axe du caloduc 20, tout en respectant les distances de cheminement.

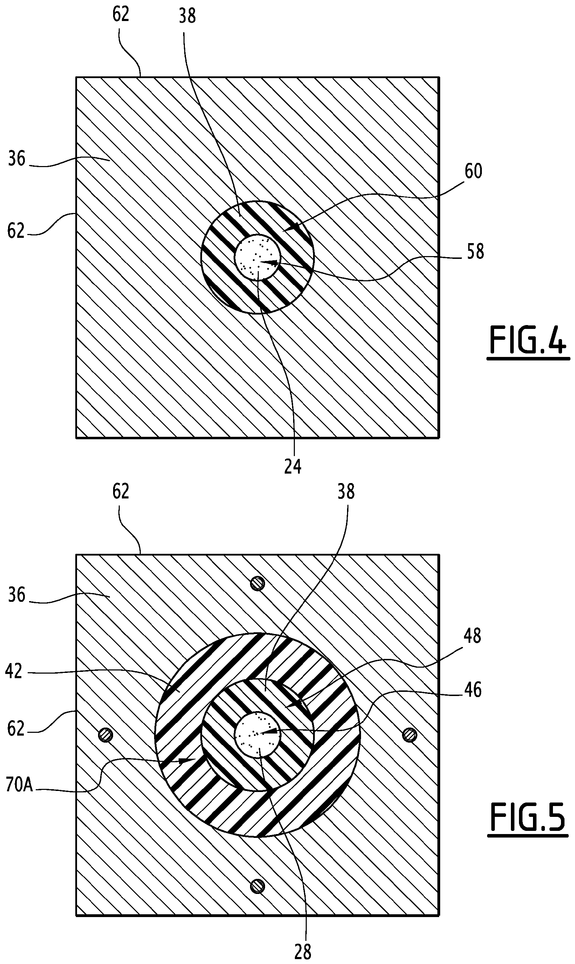

Le tronçon supérieur 32 définit un premier espace 46 de réception d'une partie du caloduc 20 et un premier volume 48 de réception d'une partie de la couche 38 de matériau isolant. Plus précisément, le premier espace 46 est propre à recevoir le réservoir 28 du caloduc 20, et s'étend longitudinalement à l'intérieur de la base supérieure 42 et de la partie supérieure 44, sur toute la hauteur du tronçon supérieur 32, la hauteur étant mesurée parallèlement à l'axe A-A'. Comme illustré sur la figure 5, le premier espace de réception 46 présente une section transversale circulaire, de diamètre sensiblement égal à 15 mm dans l'exemple de réalisation. Le premier volume de réception 48 s'étend longitudinalement à l'intérieur de la base supérieure 42, par exemple sur toute la hauteur de la base supérieure 42. Le premier volume de réception 48 présente une section transversale en forme d'anneau, de diamètre extérieur par exemple sensiblement égal à 39mm, et de diamètre intérieur par exemple sensiblement égal à 15 mm. Le premier volume de réception 48 s'étend en outre autour d'une partie du premier espace de réception 46.

En revenant à la figure 3, le tronçon inférieur 34 comporte une base creuse inférieure 50 et une partie creuse inférieure 52, venue de matière avec la base inférieure 50. La base inférieure 50 présente une section transversale par exemple sensiblement rectangulaire, de préférence carrée de côté compris entre 40 mm et 90 mm. La partie inférieure 52 présente une section transversale par exemple sensiblement rectangulaire, de préférence carrée de côté compris entre 40 mm et 90 mm.

Le tronçon inférieur 34 définit un deuxième espace 54 de réception d'une partie du caloduc 20 et un deuxième volume 56 de réception d'une partie de la couche 38 de matériau isolant. Plus précisément, le deuxième espace 54 est propre à recevoir une partie de la portion chaude 24 du caloduc 20, et s'étend longitudinalement à l'intérieur de la base inférieure 50 et de la partie inférieure 52, par exemple sur toute la hauteur de la base inférieure 50 et sur une partie de la hauteur de la partie inférieure 52. Le deuxième espace de réception 54 présente une section transversale circulaire, de diamètre sensiblement égal à 15 mm dans l'exemple de réalisation. Le deuxième volume de réception 56 s'étend longitudinalement à l'intérieur de la base inférieure 50 et de la partie inférieure 52, par exemple sur toute la hauteur du tronçon inférieur 34. Le deuxième volume de réception 56 comprend un premier sous-volume de réception 57A et un deuxième sous-volume de réception 57B. Le premier sous-volume 57A présente une section transversale en forme d'anneau, de diamètre extérieur par exemple sensiblement égal à 39mm, et de diamètre intérieur par exemple sensiblement égal à 15 mm. Le premier sous-volume 57A s'étend autour du deuxième espace de réception 54. Le deuxième sous-volume 57B présente une section transversale circulaire, de diamètre égal au diamètre extérieur de la section transversale du premier sous-volume 57A, c'est-à-dire sensiblement égal à 39mm dans l'exemple de réalisation.

Comme représenté sur les figures 3 et 4, le tronçon conducteur 36 définit un troisième espace 58 de réception d'une partie du caloduc 20 et un troisième volume 60 de réception d'une partie de la couche 38 de matériau isolant. Plus précisément, le troisième espace 58 est propre à recevoir une partie de la portion chaude 24 du caloduc 20 et présente une section transversale circulaire, de diamètre sensiblement égal à 15 mm dans l'exemple de réalisation. Le troisième volume de réception 60 s'étend longitudinalement à l'intérieur du tronçon conducteur 36, sur toute sa hauteur. Autrement dit, le tronçon conducteur 36 s'étend autour d'une partie de la couche 38 de matériau isolant. Le troisième volume de réception 60 présente une section transversale en forme d'anneau, de diamètre extérieur par exemple sensiblement égal à 39mm, et de diamètre intérieur par exemple sensiblement égal à 15 mm. Le troisième volume de réception 60 s'étend en outre autour du troisième espace de réception 58.

Dans l'exemple de réalisation de la figure 2, la couche 38 de matériau isolant 40 s'étend à l'intérieur des premier, deuxième et troisième volumes de réception 48, 56, 60. Elle forme ainsi un conduit cylindrique dont la courbe directrice est un cercle, et dont la surface externe est appliquée contre les tronçons d'isolation électrique 32, 34 et contre le tronçon conducteur 36. La couche 38 s'étend avantageusement autour de la portion chaude 24 et d'une partie du réservoir 28 du caloduc 20.

Dans l'exemple de réalisation, le tronçon conducteur 36 comporte quatre parois externes longitudinales 62 sensiblement rectangulaires, une paroi transversale supérieure 64A et une paroi transversale inférieure 64B. Les parois externes 62 sont sensiblement perpendiculaires entre elles et confèrent avantageusement au tronçon conducteur 36 une forme extérieure de parallélépipède rectangle. Chaque paroi externe 62 présente une hauteur par exemple comprise entre 100 mm et 220 mm. Le tronçon conducteur 36 est appliqué localement contre le dispositif électrique 10 sur une de ses parois externes 62. Plus précisément, le tronçon conducteur 36 est fixé au dispositif électrique 10 sur cette paroi externe 62, via des moyens de fixation appropriés, connus en soi et non représentés sur les figures. La paroi transversale supérieure 64A, respectivement inférieure 64B définit une surface de contact entre le tronçon conducteur 36 et le tronçon d'isolation supérieur 32, respectivement inférieur 34.

Le tronçon conducteur 36 comporte également au moins un rebord 66 situé sur une des parois transversales 64A, 64B. Dans l'exemple de réalisation des figures 3 à 5, le tronçon conducteur 36 comporte sur la paroi transversale supérieure 64A un rebord supérieur 66A faisant saillie longitudinalement depuis une section transversale du tronçon conducteur 36. Il comporte également sur la paroi transversale inférieure 64B un rebord inférieur 66B faisant saillie longitudinalement depuis une section transversale du tronçon conducteur 36.

Le tronçon conducteur 36 est réalisé en métal, par exemple en aluminium. Le tronçon conducteur 36 présente avantageusement un axe de révolution. Dans l'exemple de réalisation, l'axe de révolution du tronçon conducteur 36 est l'axe longitudinal A-A'. On comprend ainsi que l'élément d'isolation électrique 22 présente avantageusement un axe de révolution, cet axe de révolution étant l'axe longitudinal A-A' dans l'exemple de réalisation.

Dans la suite de la description, il ne sera fait référence qu'à la paroi transversale supérieure 64A et au rebord supérieur 66A, la paroi transversale inférieure 64B et le rebord inférieur 66B présentant une structure identique.

Comme illustré sur la figure 3, la paroi transversale supérieure 64A comporte une paroi centrale de fond 67A percée d'un orifice central 68A de passage du caloduc 20 et de la couche 38 de matériau isolant. Dans l'exemple de réalisation, la paroi de fond 67A présente une forme sensiblement circulaire et s'étend radialement dans un plan perpendiculaire à l'axe longitudinal A-A'. L'orifice central 68A présente un diamètre par exemple sensiblement égal à 39mm.

Le rebord supérieur 66A définit une zone 70A de pénétration progressive longitudinale du tronçon d'isolation supérieur 32 au contact du tronçon conducteur 36 et de la couche 38 de matériau isolant. Plus particulièrement, le rebord supérieur 66A définit une zone 70A de pénétration progressive longitudinale de la région basse de la base creuse supérieure 42, au contact du tronçon conducteur 36 et de la couche 38 de matériau isolant.

La zone 70A définit au moins une interface 72 de jonction entre le tronçon d'isolation supérieur 32, le tronçon conducteur 36 et la couche 38 de matériau isolant. Dans l'exemple de réalisation, la zone 70A définit une interface de jonction circulaire 72A. L'interface circulaire 72A est située sur la paroi de fond 67A et correspond au pourtour de l'orifice central 68A.

Le rebord supérieur 66A comprend une bordure transversale 74A délimitant la partie supérieure de la zone de pénétration progressive 70A. Dans l'exemple de réalisation des figures 3 à 5, la bordure transversale 74A est circulaire et délimite, avec la paroi de fond 67A, une cavité annulaire, comprise entre la paroi de fond 67A et le plan tangent au rebord supérieur 66A. La zone de pénétration progressive 70A correspond, selon cet exemple, à la cavité annulaire.

Comme représenté sur la figure 3, la bordure transversale 74A est décalée de l'interface circulaire 72A d'une hauteur H et d'une largeur L, la largeur L étant mesurée perpendiculairement à l'axe longitudinal A-A'.

Avantageusement, le rapport entre la hauteur H et la largeur L est supérieur ou égal à un. Dans l'exemple de réalisation, la hauteur H est sensiblement égale à 20 mm et la largeur L est comprise entre 5 et 7 mm.

La configuration et la position respective de l'interface circulaire 72A et de la bordure transversale 74A permettent de modifier la courbure des lignes de champ électrique générées par la connexion électrique du dispositif électrique 10 à la caténaire, et circulant autour du tronçon conducteur 36. En particulier, les lignes de champ circulant au niveau de l'interface de jonction circulaire 72A sont moins resserrées par rapport à celles circulant au niveau de l'interface de jonction d'un élément d'isolation de l'art antérieur, dans lequel la paroi transversale supérieure est plane et définit une surface de contact plane entre le tronçon d'isolation supérieur et le tronçon conducteur, et l'interface de jonction entre le tronçon supérieur, le tronçon conducteur et la couche de matériau isolant est de type « plan-plan ». Ce desserrement des lignes de champ électrique permet un relâchement des contraintes diélectriques exercées au niveau de l'interface de jonction 72A.

La zone de pénétration progressive 70A est ainsi configurée pour permettre un relâchement des contraintes diélectriques au niveau de l'interface de jonction 72A.

La description s'applique de la même manière au rebord inférieur 66B, en remplaçant « inférieur » par « supérieur » dans le texte.

En fonctionnement, l'élément d'isolation électrique 22 favorise, via le tronçon conducteur 36, le transfert thermique entre le dispositif électrique 10 et le caloduc 20. L'élément d'isolation électrique 22 selon l'invention permet donc d'améliorer, par conduction thermique, l'efficacité du refroidissement du dispositif 10 par le caloduc 20.

En variante, les tronçons d'isolation supérieur 32 et inférieur 34 ne définissent pas de volumes de réception d'une partie de la couche 38 de matériau isolant 40. Selon cette variante, la couche 38 de matériau isolant s'étend uniquement à l'intérieur du volume de réception 60 du tronçon conducteur 36, autour d'une partie de la portion chaude 24. Le tronçon conducteur 36 s'étend alors autour de toute la couche 38 de matériau isolant.

Bien que la description ait été faite en référence à une paroi de fond 67A sensiblement plane et perpendiculaire à l'axe longitudinal A-A', et à une bordure transversale 74A circulaire, d'autres agencements sont possibles pour le tronçon conducteur 36. En particulier, la paroi de fond 67A peut présenter une courbure au niveau d'un ou plusieurs points d'inflexion, et/ou être inclinée par rapport à l'axe longitudinal A-A' en formant par exemple un cône de révolution. D'autres agencements encore sont possibles pour le tronçon conducteur 36, la zone de pénétration progressive longitudinale 70A étant configurée, dans tous ces agencements du tronçon conducteur 36, pour permettre un relâchement des contraintes diélectriques au niveau de l'interface de jonction 72A.

Selon un autre mode de réalisation, non représenté, le caloduc 20 est agencé à l'extérieur de l'élément d'isolation électrique 22. Selon ce mode de réalisation, la couche 38 de matériau isolant n'est plus disposée à l'intérieur des tronçons 32, 34, 36 mais est disposée entre le caloduc 20 et au moins le tronçon conducteur 36. La couche 38 de matériau isolant ne forme alors plus un conduit cylindrique dont la courbe directrice est un cercle mais présente une forme sensiblement parallélépipédique munie de deux faces étendues en regard l'une à l'autre. Une première face étendue présente une surface de contact sensiblement plane. La deuxième face étendue présente une surface comprenant une cavité de réception semi-cylindrique, ouverte vers l'extérieur. La couche 38 est appliquée, sur la surface de contact de sa première face étendue, au moins contre le tronçon conducteur 36. La couche 38 reçoit en outre, dans la cavité de réception semi-cylindrique de sa deuxième face étendue, le caloduc 20, la surface extérieure de la cavité de réception formant une surface de contact entre la couche 38 et le caloduc 20. En outre, les tronçons d'isolation électrique 32, 34 et le tronçon conducteur 36 ne présentent plus d'axe longitudinal de révolution. Chaque tronçon d'isolation électrique 32, 34 est une pièce pleine réalisée en matière plastique et ne comporte pas d'espace 46, 54 de réception d'une partie du caloduc 20, ni de volume 48, 56 de réception d'une partie de la couche 38 de matériau isolant. Le tronçon conducteur 36 est une pièce pleine réalisée en métal et ne comporte pas d'espace 58 de réception d'une partie du caloduc 20, ni de volume 60 de réception d'une partie de la couche 38 de matériau isolant. A la différence du premier mode de réalisation décrit précédemment, le tronçon conducteur 36 ne présente plus une forme extérieure de parallélépipède rectangle. En effet, seules deux parois externes 62 du tronçon conducteur 36 selon ce mode de réalisation sont rectangulaires. Le tronçon conducteur 36 est appliqué localement contre le dispositif électrique 10 sur une de ces deux parois externes rectangulaires 62, et contre la couche 38 de matériau isolant sur l'autre de ces parois externes 62. En outre, selon ce mode de réalisation, la paroi de fond 67A n'est plus percée d'un orifice central 68A. Elle n'est plus de forme circulaire mais forme un plan incliné par rapport à l'axe longitudinal A-A', constituant ainsi, avec le rebord 66A, une forme « en talus ». Par ailleurs, l'interface de jonction 72A et la bordure transversale 74A ne sont plus circulaires mais rectilignes, et s'étendent selon une direction perpendiculaire à l'axe longitudinal A-A'.

Le fonctionnement de l'élément d'isolation électrique 22 selon ce mode de réalisation est identique à celui du mode de réalisation précédent, et n'est donc pas décrit à nouveau.

Bien que dans les modes de réalisation précédemment décrits la couche de matériau isolant s'étend longitudinalement au moins sur toute la hauteur du tronçon conducteur, d'autres modes de réalisation sont envisageables, dans lesquels la couche de matériau isolant s'étend longitudinalement sur une partie seulement de la hauteur dudit tronçon conducteur.

Dans tous les modes de réalisation, l'élément 22 est apte à supporter une exposition continue à une différence de potentiel de 60 kV alternatif / 50 Hz pendant une minute. Cela rend l'élément 22 particulièrement adapté pour isoler électriquement un circuit électrique connecté directement au potentiel de la caténaire, et notamment d'une caténaire délivrant une tension supérieure à 14 kV efficace.

On conçoit ainsi que l'élément d'isolation électrique selon l'invention permet d'améliorer l'isolation électrique entre un dispositif électrique comportant un circuit électrique propre à être exposé de manière prolongée à une tension d'au moins 14 kV efficace, et un organe de refroidissement du dispositif électrique relié à la masse, tout en assurant des performances thermiques satisfaisantes pour l'organe de refroidissement.

## Revendications

1. Elément (22) d'isolation électrique entre un dispositif électrique (10) comportant un circuit électrique (18) propre à être relié directement à une caténaire (14), et un organe (20) de refroidissement du dispositif électrique (10), **caractérisé en ce que** l'élément (22) comporte :
- un tronçon (36) conducteur d'électricité, le tronçon conducteur (36) s'étendant en hauteur selon un axe longitudinal (A-A') et étant propre à être appliqué au moins localement contre le dispositif électrique (10),
- au moins un tronçon d'isolation électrique (32, 34) rapporté contre le tronçon conducteur (36), et
- une couche (38) de matériau isolant (40) appliquée localement au moins contre le tronçon conducteur (36),
le tronçon conducteur (36) comprenant sur une de ses parois (64A, 64B) au moins un rebord (66A, 66B), le ou chaque rebord (66A, 66B) faisant saillie longitudinalement depuis une section transversale du tronçon conducteur (36) et définissant une zone (70A) de pénétration progressive longitudinale du tronçon d'isolation (32, 34) au contact du tronçon conducteur (36) et de la couche (38) de matériau isolant (40), ladite zone de pénétration progressive (70A) définissant au moins une interface (72A) de jonction entre le tronçon d'isolation (32, 34), le tronçon conducteur (36) et la couche (38) de matériau isolant (40), ladite zone de pénétration progressive (70A) étant configurée pour permettre un relâchement des contraintes diélectriques au niveau de l'interface de jonction (72A).

2. Elément (22) selon la revendication 1, **caractérisé en ce que** le rebord (66A) comprend une bordure transversale (74A) délimitant la partie supérieure de la zone de pénétration progressive (70A), la bordure transversale (74A) étant décalée de l'interface de jonction (72A) d'une première distance (H) mesurée suivant l'axe longitudinal (A-A'), et d'une deuxième distance (L) mesurée suivant un axe perpendiculaire à l'axe longitudinal (A-A'), le rapport entre la première distance (H) et la deuxième distance (L) étant de préférence supérieur ou égal à un.

3. Elément (22) selon la revendication 1 ou 2, **caractérisé en ce qu'**il comprend un premier tronçon d'isolation électrique (32) et un deuxième tronçon d'isolation électrique (34), le tronçon conducteur (36) étant agencé entre les premier (32) et deuxième (34) tronçons d'isolation électrique.

4. Elément (22) selon la revendication 3, **caractérisé en ce que** le tronçon conducteur (36) comprend sur une première paroi (64A) un premier rebord (66A) et sur une deuxième paroi (64B) un deuxième rebord (66B), le premier rebord (66A) définissant une zone (70A) de pénétration progressive longitudinale du premier tronçon d'isolation (32) au contact du tronçon conducteur (36) et de la couche (38) de matériau isolant (40), le deuxième rebord (66B) définissant une zone de pénétration progressive longitudinale du deuxième tronçon d'isolation (34) au contact du tronçon conducteur (36) et de la couche (38) de matériau isolant (40).

5. Elément (22) selon l'une quelconque des revendications précédentes, **caractérisé en ce que** le matériau isolant (40) est du nitrure de bore hexagonal sous forme compactée.

6. Elément (22) selon l'une quelconque des revendications précédentes, **caractérisé en ce qu'**il est apte à supporter une exposition continue à une différence de potentiel de 60 kV alternatif ou 90kV continue appliquée entre le tronçon conducteur (36) et l'organe de refroidissement (20).

7. Elément (22) selon l'une quelconque des revendications précédentes, **caractérisé en ce qu'**il présente un axe longitudinal (A-A') de révolution, le ou chaque tronçon d'isolation électrique (32, 34) définissant un espace (46, 54) de réception d'au moins une partie de l'organe de refroidissement (20), l'espace de réception (46, 54) étant compris à l'intérieur dudit tronçon (32, 34), le tronçon conducteur (36) s'étendant autour d'au moins une partie de la couche (38) de matériau isolant (40), la couche (38) de matériau isolant (40) s'étendant autour d'au moins une partie de l'organe de refroidissement (20).

8. Elément (22) selon la revendication 7, **caractérisé en ce que** le ou chaque tronçon d'isolation électrique (32, 34) définit un volume (48, 56) de réception d'une partie de la couche (38) de matériau isolant (40), ledit volume de réception (48, 56) étant compris à l'intérieur dudit tronçon (32, 34).

9. Système (12) de refroidissement d'un dispositif électrique (10), du type comprenant au moins un organe de refroidissement (20) et un élément (22) d'isolation électrique entre le ou chaque organe de refroidissement (20) et le dispositif électrique (10), **caractérisé en ce que** l'élément d'isolation électrique (22) est conforme à l'une quelconque des revendications précédentes.

10. Système (12) selon la revendication 9 lorsque l'élément d'isolation électrique (22) est selon la revendication 7 ou 8, **caractérisé en ce que** le ou chaque organe de refroidissement (20) est un caloduc, le caloduc (20) comportant une portion chaude (24) agencée à l'intérieur de l'élément d'isolation électrique (22), une portion froide (26) disposée à l'extérieur de l'élément d'isolation électrique (22), et un réservoir (28) contenant un fluide caloporteur (30) et s'étendant entre la portion chaude (24) et la portion froide (26), à l'intérieur de l'élément d'isolation électrique (22), la portion chaude (24) étant agencée en outre à l'intérieur d'au moins une partie de la couche (38) de matériau isolant (40) de l'élément d'isolation électrique (22).

## Patentansprüche

1. Elektrisches Isolationselement (22) zwischen einer elektrischen Vorrichtung (10), aufweisend einen Stromkreis (18), der imstande ist, direkt mit einer Fahrleitung (14) verbunden zu sein, und ein Kühlorgan (20) der elektrischen Vorrichtung (10), **dadurch gekennzeichnet, dass** das Element (22) aufweist:
- einen stromleitenden Abschnitt (36), wobei sich der leitende Abschnitt (36) in der Höhe gemäß einer Längsachse (A-A') erstreckt und imstande ist, mindestens lokal an der elektrischen Vorrichtung (10) anzuliegen,
- mindestens einen elektrisch isolierenden Abschnitt (32, 34), der am leitenden Abschnitt (36) angebracht ist, und
- eine Schicht (38) von Isolationsmaterial (40), die lokal mindestens am leitenden Abschnitt (36) anliegt,
wobei der leitende Abschnitt (36) auf einer seiner Wände (64A, 64B) mindestens eine Kante (66A, 66B) umfasst, wobei die oder jede Kante (66A, 66B) längs ab einen Querschnitt des leitenden Abschnitts (36) hervorsteht und eine Zone (70A) des schrittweisen Eindringens längs des Isolationsabschnitts (32, 34) im Kontakt mit dem leitenden Abschnitt (36) und der Schicht (38) von Isolationsmaterial (40) definiert, wobei die Zone des schrittweisen Eindringens (70A) mindestens eine Verbindungsschnittstelle (72A) zwischen dem Isolationsabschnitt (32, 34), dem leitenden Abschnitt (36) und der Schicht (38) von Isolationsmaterial (40) definiert, wobei die Zone des schrittweisen Eindringens (70A) konfiguriert ist, um einen Abbau der dielektrischen Spannungen im Bereich der Verbindungsschnittstelle (72A) zu erlauben.

2. Element (22) nach Anspruch 1, **dadurch gekennzeichnet, dass** die Kante (66A) einen transversalen Rand (74A) umfasst, der den oberen Teil der Zone des schrittweisen Eindringens (70A) begrenzt, wobei der transversale Rand (74A) von der Verbindungsschnittstelle (72A) in einem ersten Abstand (H), gemessen gemäß der Längsachse (A-A'), und in einem zweiten Abstand (L), gemessen gemäß einer zur Längsachse (A-A') senkrechten Achse, versetzt ist, wobei das Verhältnis zwischen dem ersten Abstand (H) und dem zweiten Abstand (L) vorzugsweise größer oder gleich Eins ist.

3. Element (22) nach Anspruch 1 oder 2, **dadurch gekennzeichnet, dass** es einen ersten elektrischen Isolationsabschnitt (32) und einen zweiten elektrischen Isolationsabschnitt (34) umfasst, wobei der leitende Abschnitt (36) zwischen dem ersten (32) und zweiten (34) elektrischen Isolationsabschnitt ausgebildet ist.

4. Element (22) nach Anspruch 3, **dadurch gekennzeichnet, dass** der leitende Abschnitt (36) auf einer ersten Wand (64A) eine erste Kante (66A) und auf einer zweiten Wand (64B) eine zweite Kante (66B) umfasst, wobei die erste Kante (66A) eine Zone des schrittweisen Eindringens längs (70A) des ersten Isolationsabschnitts (32) im Kontakt mit dem leitenden Abschnitt (36) und der Schicht (38) von Isolationsmaterial (40) definiert, wobei die zweite Kante (66B) eine Zone des schrittweisen Eindringens längs des zweiten Isolationsabschnitts (34) im Kontakt mit dem leitenden Abschnitt (36) und der Schicht (38) von Isolationsmaterial (40) definiert.

5. Element (22) nach einem der vorangehenden Ansprüche, **dadurch gekennzeichnet, dass** das Isolationsmaterial (40) hexagonales Bornitrid in kompaktierter Form ist.

6. Element (22) nach einem der vorangehenden Ansprüche, **dadurch gekennzeichnet, dass** es imstande ist, einer kontinuierlichen Exposition einer Potentialdifferenz von 60 kV Wechselstrom oder 90 kV Gleichstrom ausgesetzt zu sein, die zwischen dem leitenden Abschnitt (36) und dem Kühlorgan (20) angelegt ist.

7. Element (22) nach einem der vorangehenden Ansprüche, **dadurch gekennzeichnet, dass** es eine Rotationslängsachse (A-A') aufweist, wobei der oder jeder elektrische Isolationsabschnitt (32, 34) eine Empfangsraum (46, 54) mindestens eines Teils des Kühlorgans (20) definiert, wobei der Empfangsraum (46, 54) im Innern des Abschnitts (32, 34) inbegriffen ist, wobei sich der leitende Abschnitt (36) um mindestens einen Teil der Schicht (38) von Isolationsmaterial (40) erstreckt, wobei sich die Schicht (38) von Isolationsmaterial (40) um mindestens einen Teil des Kühlorgans (20) erstreckt.

8. Element (22) nach Anspruch 7, **dadurch gekennzeichnet, dass** der oder jeder elektrische Isolationsabschnitts (32, 34) ein Empfangsvolumen (48, 56) eines Teils der Schicht (38) von Isolationsmaterial (40) definiert, wobei das Empfangsvolumen (48, 56) im Innern des Abschnitts (32, 34) inbegriffen ist.

9. Kühlsystem (12) einer elektrischen Vorrichtung (10) des Typs, der mindestens ein Kühlorgan (20) und ein elektrisches Isolationselement (22) zwischen dem oder jedem Kühlorgan (20) und der elektrischen Vorrichtung (10) umfasst, **dadurch gekennzeichnet, dass** das elektrische Isolationselement (22) einem der vorangehenden Ansprüche entspricht.

10. System (12) nach Anspruch 9, wenn das elektrische Isolationselement (22) nach Anspruch 7 oder 8 ist, **dadurch gekennzeichnet, dass** das oder jedes Kühlorgan (20) ein Wärmerohr ist, wobei das Wärmerohr (20) einen warmen Abschnitt (24), der im Innern des elektrischen Isolationselements (22) ausgebildet ist, einen kalten Abschnitt (26), der außerhalb des elektrischen Isolationselements (22) angeordnet ist, und einen Vorratsbehälter (28), der ein Wärmeträgerfluid enthält (30) und sich zwischen dem warmen Abschnitt (24) und dem kalten Abschnitt (26) im Innern des elektrische Isolationselement (22) erstreckt, aufweist, wobei der warme Abschnitt (24) ferner im Innern von mindestens einem Teil der Schicht (38) von Isolationsmaterial (40) des elektrischen Isolationselements (22) ausgebildet ist.

## Claims

1. Member (22) for electrical insulation between an electrical device (10), comprising an electrical circuit (18) adapted to be connected directly to an overhead line (14), and a member (20) for cooling the electric device (10), **characterised in that** the member (22) comprises:
- an electrically-conductive section (36), whereby the conductive section (36) extends vertically along a longitudinal axis (A-A') and is adapted to be applied at least locally against the electrical device (10),
- at least one electrically insulating section (32, 34), applied on the conductive section (36), and
- a layer (38) of insulating material (40) applied at least locally on the conductive section (36),
the conductive section (36) comprising at least one flange (66A, 66B) on one of its walls (64A, 64B), whereby the or each flange (66A, 66B) projecting longitudinally from a lateral section of the conductive section (36) to delimit an area (70A) of gradual longitudinal penetration of the insulating section (32, 34) in contact with the conductive section (36) and the layer (38) of insulating material (40), the said gradual penetration area (70A) delimiting at least one junction interface (72A) between the insulating section (32, 34), the conductive section (36) and the layer (38) of insulating material (40), the said gradual penetration area (70A) being configured to allow a relaxation of the dielectric stress at the junction interface (72A).

2. Member (22) according to claim 1, **characterised in that** the flange (66A) comprises a lateral edge (74A) delimiting the upper part of the gradual penetration area (70A), whereby the lateral edge (74A) is offset from the junction interface (72A) by a first distance (H) measured along the longitudinal axis (A-A'), and a second distance (L) measured along an axis perpendicular to the longitudinal axis (A-A'), whereby the ratio between the first distance (H) and the second distance (L) is greater than or equal to one.

3. Member (22) according to claim 1 or claim 2, **characterised in that** it comprises a first electrically-insulating section (32) and a second electrically-insulating section (34), whereby the conductive section (36) is arranged between the first (32) and second (34) electrically-insulating sections.

4. Member (22) according to claim 3, **characterised in that** the conductive section (36) comprises a first flange (66A) on a first wall (64A), and a second flange (66B) on a second wall (64B), whereby the first flange (66A) delimits an area (70A) of gradual longitudinal penetration of the first insulating section (32) in contact with the conductive section (36) and the layer (38) of insulating material (40), whereby the second flange (66B) delimits an area of gradual longitudinal penetration of the second insulating section (34) in contact with the conductive section (36) and the layer (38) of insulating material (40).

5. Member (22) according to any one of the previous claims, **characterised in that** the insulating material (40) is of hexagonal boron nitride in a compacted form.

6. Member (22) according to any one of the previous claims, **characterised in that** it is capable of withstanding continuous exposure to a potential difference of 60 kV AC or 90 kV DC applied between the conductive portion (36) and the cooling member (20).

7. Member (22) according to any one of the previous claims, **characterised in that** it has a longitudinal axis of revolution (A-A'), whereby the or each electrically-insulating section (32, 34) delimits a space (46, 54) for receiving at least a part of the cooling member (20), whereby the receiving space (46, 54) is included within the said part (32, 34), whereby the conductive section (36) extends around at least a part of the layer (38) of insulating material (40), and whereby the layer (38) of insulating material (40) extends around at least a part of the cooling member (20).

8. Member (22) according to claim 7, **characterised in that** the or each electrically-insulating sections (32, 34) defines a volume (48, 56) for receiving a part of the layer (38) of insulating material (40), whereby the said receiving volume (48, 56) is included within the said part (32, 34).

9. A system (12) for cooling an electrical device (10), of the type comprising at least one cooling member (20) and an electrically-insulating member (22) between the or each cooling member (20) and the electrical device (10), **characterised in that** the electrically-insulating member (22) complies with any one of the previous claims.

10. A system (12) according to claim 9 when the electrically isolating member (22) is according to claim 7 or claim 8, **characterised in that** each cooling member (20) is a heat pipe, the heat pipe (20) comprising a hot part (24) arranged inside the electrically-insulating member (22), a cold part (26) arranged outside the electrically-insulating member (22), and a reservoir (28) containing a coolant (30) and extending between the hot part (24) and the cold part (26) within the electrically-insulating member (22), the hot part (24) being further arranged inside at least a part of the layer (38) of insulating material (40) of the electrically-insulating member (22).
